# EUROPÄISCHE PATENTSCHRIFT

(11) **EP 0 761 707 B1**
(45) Veröffentlichungstag und Bekanntmachung des Hinweises auf die Patenterteilung: **20.03.2002**
(21) Anmeldenummer: 96113238.8
(22) Anmeldetag: 19.08.1996
(51) Int. Cl.: C08G 18/79, C08G 18/73

(54) **Bindemittel enthaltend Isocyanurat-Polyisocyanate auf Basis von 1,4-Diisocyanatobutan und deren Verwendung zur Beschichtung von Substraten**
Binders containing isocyanurate-polyisocyanates based on 1,4-diisocyanate butane and their use as coating
Liants contenant des groupes isocyanurate formés par oligomérisation de butanediisocyanate 1,4 et leur usage comme revêtement

(30) Priorität: 31.08.1995 DE 19532063
(43) Veröffentlichungstag der Anmeldung: 12.03.1997
(73) Patentinhaber: BAYER AG, 51368 Leverkusen (DE)
(72) Erfinder: Mertes, Harald, Dr., 50670 Köln (DE); Halpaap, Reinhard, Dr., 51519 Odenthal (DE); Sonntag, Michael, Dr., 51519 Odenthal (DE); Bock, Manfred, Dr., 51375 Leverkusen (DE); Nachtkamp, Klaus Dr., 40593 Düsseldorf (DE)

(56) Entgegenhaltungen:
- EP-A- 0 273 836
- EP-A- 0 571 038
- EP-A- 0 669 351

## Beschreibung

Die Erfindung betrifft Bindemittelkombinationen bestehend im wesentlichen aus einem Polyisocyanat und einem Polyol und deren Verwendung zur Beschichtung von Substraten, wobei als Polyisocyanat ein Isocyanurat-Polyisocyanat auf Basis von 1,4-Diisocyanatobutan (BDI) eingesetzt wird

Zweikomponenten-Beschichtungsmittel, die als Bindemittel eine Polyisocyanatkomponente in Kombination mit einer gegenüber Isocyanatgruppen reaktionsfahigen Reaktivkomponente, insbesondere einer Polyhydroxylkomponente, enthalten, sind seit langem bekannt. Sie eignen sich zur Herstellung von hochwertigen Überzügen, die hart, elastisch, abrieb-, lösungsmittel- und witterungsbeständig sind.

Diese Beschichtungsbindemittel haben jedoch sehr lange Trocknungszeiten, die einer wirtschaftlichen Arbeitsweise entgegenstehen. Die Aushärtung kann z.B. durch Temperaturerhöhung wesentlich beschleunigt werden, jedoch ist dies beispielsweise bei Kunststoffteilen oder bei sperrigen Gütern nur bedingt möglich Reparaturlackierungen an fertig montierten Kraftfahrzeugen oder Beschichtungen im Bereich der Großfahrzeug- und Industrielackierung sind mit diesen Lacksystemen nur eingeschränkt möglich.

Die Trocknungszeiten von Zweikomponenten-Polyurethanbeschichtunessystemen bei Raumtemperatur können z.B. durch Zugabe von Polyisocyanaten auf Basis von cycloaliphatischen Diisocyanaten (z.B EP-A 3765 und EP-A 17 998) zu der Bindemittelkombination verkürzt werden. Die kürzere Trocknungszeit ist physikalisch bedingt. Eine chemische Vernetzung findet nicht statt, was zu einer Verschlechterung der Losungsmittelbestandigkeit, insbesondere in der Fruhphase der Trocknung führt Dies ist vor allem bei der Autoreparaturlackierung von Nachteil. Darüber hinaus weisen die mit cycloaliphatischen Polyisocyanaten hergestellten Beschichtungen eine gewisse Sprödigkeit und eingeschränkte Elastizität auf. Die Anwendung, besonders in Lacken, an die auch bei tiefen Temperaturen hohe Anforderungen bezüglich der Elastizität gestellt werden, ist eingeschränkt.

Zum Beispiel die EP-A 470 461 beschreibt spezielle, für die Autoreparaturlackierung geeignete Zweikomponentenlacke durch Verwendung von speziellen - Estergruppen aufweisenden Diaminen, die durch Umsetzung von 3,3'-Dimethyl-4,4'-diamino-dicyclohexylmethan mit Malein- bzw. Fumarsäurediethylester hergestellt werden, in Abmischung mit Polyacrylatpolyolen und Polyesterpolyolen in einem bestimmten Verhältnis als Kombinationspartner für die Polyisocyanatkomponente. Jedoch zeigen Zweikomponenten-Polyurethansysteme auf Basis von Polyaminen als Reaktionspartner für die Polyisocyanatkomponente nicht nur eine schnellere Aushärtung als Systeme auf Basis von Polyolen, sondern auch eine kürzere Verarbeitungszeit, was die Einsatzmöglichkeiten dieser Systeme neben der Begrenzung durch Art und Mischungsverhältnis der anteilig mitzuverwendenden Polyole weiter einschränkt. Wünschenswert wäre es jedoch, die Polyolkomponente frei wählen zu können, um die erforderlichen Anwendungseigenschaften des Systems durch Variation dieser Komponente einstellen zu können.

Aufgabe der vorliegenden Erfindung ist, Bindemittelsysteme zur Verfügung zu stellen, die einerseits die hervorragenden anwendungstechnischen Eigenschaften sowie die breite Einsetzbarkeit für unterschiedlichste Anwendungen von Zweikomponenten-Polyurethanlacken in sich vereinen und andererseits bei der Beschichtung von Substraten unter milden Aushärtungsbedingungen, z.B. bei Temperaturen unterhalb 100°C, insbesondere bei der Autoreparatur- und Industrielackierung, eine schnelle Antrocknung bei gleichzeitig vorhandener Lösemittelbeständigkeit und Elastizität der damit hergestellten Beschichtungen zeigen.

Gegenstand der Erfindung sind Bindemittelkombinationen, bestehend im wesentlichen aus
a) einer Polyisocyanatkomponente und
b) einer Polyolkomponente,
wobei die Mengenverhältnisse der Komponenten a) und b) einem Aquivalentverhaltnis von Isocyanatgruppen der Komponente a) zu gegenüber Isocyanatgruppen reaktionsfähigen Gruppen der Komponente b) von 0,8:1 bis 3:1 entsprechen, dadurch gekennzeichnet, daß das Polyisocyanat ein Isocyanurat-Polyisocyanat auf Basis von 1,4-Diisocyanatobutan (BDI) mit einem Isocyanatgehalt von 20 bis 30 Gew.-% und einem Gehalt an freiem monomerem BDI von weniger als 2 Gew.-% ist.

Die Verwendung von Trimerisaten auf Basis von 1,4-Diisocyanatobutan als Polyisocyanatkomponente in Zweikomponenten-Beschichtungssystemen ist bekannt (z.B. EP-A 571 038). In der genannten Anmeldung wird ein spezielles Verfahren zur Herstellung eines Isocyanurat-Polyisocyanates auf Basis von 1,4-Diisocyanatobutan (BDI) durch Trimerisierung bei Temperaturen unterhalb 90°C und anschließende extraktive Aufarbeitung beschrieben.

Das erfindungsgemäß eingesetzte Isocyanurat-Polyisocyanat auf Basis von 1,4-Diisocyanatobutan ist z.B. aus der EP-A 57 653 bekannt. Es wird dort durch Trimerisierung von 1,4-Diisocyanatobutan in Gegenwart von Aminosilylgruppen haltigen Katalysatoren hergestellt. Die hervorragende Eignung von Isocyanurat-Polyisocyanaten auf Basis von 1,4-Diisocyanatobutan für Beschichtungen kann jedoch den genannten Schriften nicht entnommen werden.

Es ist daher als ausgesprochen überraschend anzusehen, daß die erfindungsgemäßen Bindemittelkombinationen unter Verwendung von BDI-Trimerisaten als Polyisocyanatkomponente für die Beschichtung von Substraten unterhalb von 100°C besonders geeignet sind. Die erfindungsgemäßen Bindemittelsysteme zeigen dabei insbesondere eine schnelle Trocknung bei gleichzeitig vorhandener guter Lösungsmittelbeständigkeit und Elastizität, was besonders im Bereich der Autoreparatur- und Industrielackierung von großer Bedeutung ist.

Zur Herstellung der erfindungsgemäßen Bindemittelkombinationen kommen als Polyisocyanatkomponente a) Isocyanurat-Polyisocyanate auf Basis von 1,4-Diisocyanatobutan (BDI) mit einem Isocyanatgehalt von 20 bis 30, vorzugsweise 22 bis 28,5 und besonders bevorzugt 23 bis 28 Gew.-% und einem Gehalt an freiem monomerem BDI von weniger als 2, vorzugsweise weniger als 0,5 Gew-% in Betracht. Sie werden hergestellt durch teilweise Trimerisierung von 1,4-Diisocyanatobutan zum Isocyanurat. Nicht umgesetztes 1,4-Diisocyanatobutan kann z.B. destillativ entfernt werden.

Das erfindungsgemäß zu verwendende Polyisocyanat a) kann z.B. im Ausgangsmaterial für die Trimerisierungsreaktion Gemische aus 1,4-Diisocyanatobutan (BDI) und bis zu 50, vorzugsweise bis zu 35 und besonders bevorzugt bis zu 20 Mol-% an aliphatischen Diisocyanaten des Molekulargewichtsbereichs 138 bis 300 enthalten.

Vorzugsweise wird als Ausgangsdiisocyanat 1,4-Diisocyanatobutan alleine eingesetzt.

Gegebenenfalls einsetzbare aliphatische Diisocyanate sind beispielsweise 1,6-Diisocyanatohexan, die isomeren Diisocyanatononane, 1,12-Diisocyanatododecan, 1-Isocyanato-3-isocyanatomethyl-3,5,5-trimethylcyclohexan (Isophorondiisocyanat), 1,3-Diisocyanatocyclobutan, 1,3- und 1,4-Diisocyanatocyclohexan, 4,4'-Bis(isocyanatocyclohexyl)-methan, 1,2-Bis-(isocyanatomethyl)-cyclobutan, 1,3- und 1,4-Bis-(isocyanatomethyl)-cyclohexan, Hexahydro-2,4- und/oder 2,6-diisocyanatotoluol, Bis-(isocyanatomethyl)-norbornan (Isomerengemisch), 1-Isocyanato-4(3)-isocyanatomethyl-1-methylcyclohexan.

Im Falle der Mitverwendung der genannten aliphatischen Diisocyanate können die hergestellten Polyisocyanate a) auch Isocyanatgehalte von 15 bis 30 Gew.-%, vorzugsweise 15 bis 25 Gew.-% enthalten.

Die bevorzugte Herstellung der Isocyanurat-Polyisocyanate auf Basis von 1,4-Diisocyanatobutan erfolgt beispielsweise nach dem in der EP-A 57 653 beschriebenen Verfahren zur Trimerisierung von Diisocyanaten unter Verwendung von Aminoisobutylverbindungen als Katalysatoren bei Temperaturen von 0 bis 300°C, vorzugsweise 40 bis 200°C und besonders bevorzugt 60 bis 150°C.

Weitere Katalysatoren wie quaternäre Ammoniumhydroxide, Ammoniumcarboxylate und Mischungen aus Alkalimetallfluoriden und quaternären Ammonium- und Phosphoniumsalzen sind z B. aus der EP-A 330 966, EP-A 355 479 bekannt

Die Trimerisierungsreaktion, gegebenenfalls in einem Lösungsmittel, wird bis zum gewünschten Umsetzungsgrad der Isocyanatgruppen durchgeführt. Beim berechneten Endisocyanatgehalt der Reaktionsmischung, der im allgemeinen zwischen 35 und 58, bevorzugt zwischen 40 und 55 und besonders bevorzugt zwischen 42 und 54 Gew.-% liegt, wird durch Zugabe eines geeigneten Katalysatorgiftes (z.B. Wasser) oder durch Abkühlung die Umsetzung beendet. Überschüssiges Diisocyanat wird abdestilliert.

Die destillative Entfernung des nicht umgesetzten Monomers aus der Reaktionsmischung erfolgt nach bekannten Verfahren, beispielsweise durch Dünnschichtdestillation. Es werden so z.B. Isocyanurat-Polyisocyanate auf Basis von BDI mit einem Gehalt an freiem monomeren BDI von weniger als 2, vorzugsweise weniger als 0,5 Gew.-% erhalten.

Selbstverständlich können als Polyisocyanatkomponente a) auch Gemische des nach dem beschriebenen Verfahren hergestellten Isocyanurat-Polyisocyanats auf Basis von 1,4-Diisocyanatobutan (BDI) mit bis zu 50, vorzugsweise bis zu 35 und besonders bevorzugt bis zu 20 Äquivalent-% an aliphatischen Lackpolyisocyanaten der an sich bekannten Art zum Einsatz kommen Als geeignete aliphatische Lackpolyisocyanate sind beispielsweise Trimerisat-, Biuret-, Allophanat- und/oder Uretdiongruppen aufweisende Polyisocyanate auf Basis von 1,6-Diisocyanatohexan oder Isophorondiisocyanat zu nennen.

Zur Herstellung der erfindungsgemäßen Bindemittelkombinationen kommen als Polyolkomponente b) im Prinzip alle aus der Polyurethanchemie bekannten Polyhydroxylverbindungen in Betracht, beispielsweise (i) Polyacrylatpolyole, (ii) Polyesterpolyole, (iii) Polycarbonatpolyole, (iv) Polyesterpolycarbonatpolyole, (v) Polyetherpolyole bzw. Gemische der genannten Verbindungen, gegebenenfalls in Abmischung mit niedermolekularen, mehrwertigen Alkoholen.

Die Polyacrylatpolyole (i) sind Hydroxylgruppen aufweisende Copolymerisate olefinisch ungesättigter Verbindungen mit einem dampfdruck- bzw membranosmometrisch bestimmten Molekulargewicht Mₙ von 800 bis 50.000, vorzugsweise 1 000 bis 20.000 und insbesondere 5.000 bis 10.000 und mit einem Hydroxylgruppengehalt von 0,1 bis 12, vorzugsweise 1 bis 10 und insbesondere 2 bis 6 Gew -%

Sie sind Copolymerisate von Hydroxylgruppen aufweisenden olefinischen Monomeren mit hydroxylgruppenfreien olefinischen Monomeren wie Vinyl- bzw. Vinylidenmonomeren wie z.B. Styrol, α-Methylstyrol, o- bzw. p-Chlorstyrol, o-, m- oder p-Methylstyrol, p-tert.-Butylstyrol, Acrylsäure, (Meth)Acrylnitril, Acryl- und Methacrylsäureester mit 1 bis 8 Kohlenstoffatomen in der Alkoholkomponente wie beispielsweise Methylacrylat, Ethylacrylat, n- bzw. Isopropylacrylat, n-Butylacrylat, 2-Ethylhexylacrylat, Isooctylacrylat, Methylmethacrylat, Ethylmethacrylat, Butylmethacrylat, Isooctylmethacrylat, 2-Ethylhexylmethacrylat; Diester der Fumarsäure, Itaconsäure, Maleinsäure mit 1 bis 8 Kohlenstoffatomen in der Alkoholkomponente wie Dimethyl-, Diethyl-, Dibutyl- und Dioctyl-maleat bzw. -fumarat, (Meth)Acrylsäureamid, Vinylester von Alkanmonocarbonsäuren mit 2 bis 5 Kohlenstoffatomen wie Vinylacetat oder Vinylpropionat und Hydroxyalkylester der Acrylsäure oder Methacrylsäure mit 2 bis 4 Kohlenstoffatomen im Hydroxyalkylrest wie z.B. 2-Hydroxyethyl-, 2-Hydroxypropyl-, 4-Hydroxybutyl-, 1,1,1-Trimethylolpropanmono- oder Pentaerythritmono-acrylat oder -methacrylat usw. Beliebige Gemische der beispielhaft genannten Monomeren können bei der Herstellung der hydroxyfunktionellen Polyacrylate auch eingesetzt werden.

Als Polyolkomponenten b) geeignete Polyesterpolyole (ii) sind beispielsweise solche eines mittleren, aus Funktionalität und Hydroxylzahl zu berechnenden Molekulargewichtes von 200 bis 3.000, vorzugsweise 250 bis 2.500, mit einem Hydroxylgruppen-Gehalt von 1 bis 21 Gew.-%, vorzugsweise 2 bis 18 Gew.-%. Sie können in an sich bekannter Art und Weise durch Umsetzung von mehrwertigen Alkoholen mit unterschüssigen Mengen an mehrwertigen Carbonsäuren und/oder Carbonsäureanhydriden und/oder Polycarbonsäureestern von C₁-C₁₀-Alkoholen oder Lactonen hergestellt werden.

Zur Herstellung der Polyesterpolyole (ii) geeignete mehrwertige Alkohole haben vorzugsweise einen Molekulargewichtsbereich von 62 bis 400, z.B. 1,2-Ethandiol, 1,2- und 1,3-Propandiol, die isomeren Butandiole, Pentandiole, Hexandiole, Heptandiole und Octandiole, 1,2- und 1,4-Cyclohexandiol, 1,4-Cyclohexandimethanol, 4,4'-(1-Methylethyliden)-bis-cyclohexanol, 1,2,3-Propantriol, 1,1,1-Trimethylolethan, 1,2,6-Hexantriol, 1,1,1-Trimethylolpropan, 2,2-Bis-(hydroxymethyl)-1,3-propandiol, 1,3,5-Tris-(2-hydroxyethyl)-isocyanurat usw

Zur Herstellung der Polyesterpolyole (ii) können gesättigte oder ungesättigte aliphatische, cycloaliphatische und/oder Heteroaromatische Säuren oder Saurederivate, die gegebenenfalls, z.B. durch Halogenatome (Cl, Br) substituiert sind, eingesetzt werden wie Carbonsäuren des Molekulargewichtsbereichs 118 bis 300 oder deren Derivate, beispielsweise Bernsteinsäure, Adipinsäure, Sebacinsäure, Phthalsäure, Isophthalsäure, Trimellitsäure, Phthalsäureanhydrid, Tetrahydrophthalsäure, Maleinsäure, Maleinsäureanhydrid, dimere und trimere Fettsäuren, Terephthalsäuredimethylester und Terephthalsäure-bis-glykolester usw., bzw. Mischungen hiervon.

Bevorzugt sind in Polyolkomponente b) als Polyesterpolyol (ii) solche, die sich in an sich bekannter Weise aus Lactonen und einfachen mehrwertigen Alkoholen, z.B. den obengenannten, als Startermolekülen unter Ringöffnung herstellen lassen. Geeignete Lactone zur Herstellung dieser Polyesterpolyole sind beispielsweise β-Propiolacton, γ-Butyrolacton, γ- und 6-Valerolacton, ε-Caprolacton, 3,5,5- und 3,3,5-Trimethylcaprolacton usw., oder beliebige Gemische solcher Lactone. Ihre Herstellung erfolgt im allgemeinen in Gegenwart von Katalysatoren wie Lewis- oder Brönstedt-Säuren, organischen Zinn- oder Titanverbindungen, bei Temperaturen von 20 bis 200°C, vorzugsweise 50 bis 160°C.

Als Polyolkomponente b) geeignete Polycarbonatpolyole (iii) sind vorzugsweise Polycarbonatdiole, die sich beispielsweise durch Umsetzung von zweiwertigen Alkoholen des Molekulargewichtsbereichs 62 bis 400 mit Diarylcarbonaten, z.B. Diphenylcarbonat, oder Phosgen herstellen lassen. Sie haben ein aus Hydroxylgruppengehalt und -funktionalität errechenbares Molekulargewicht von 250 bis 1.000.

Als Polyolkomponente b) geeignete Polyhydroxylverbindungen vom Polyestercarbonattyp (iv) sind insbesondere die an s:ch bekannten Estergruppen und Carbonatgruppen aufweisenden Diole (z.B. DE-A 1 770 245) Sie können durch Umsetzung zweiwertiger Alkohole mit Lactonen, insbesondere ε-Caprolacton und anschließende Reaktion der dabei entstehenden Polyesterdiole mit Diphenylcarbonat erhalten werden. Sie haben im allgemeinen ein aus Hydroxylgruppengehalt und -funktionalität errechenbares Molekulargewicht von 500 bis 3.000

Als Polyolkomponente b) geeignete Polyetherpolyole (v) haben ein mittleres, aus Funktionalität und Hydroxylzahl berechenbares Molekulargewicht von 200 bis 6.000, vorzugsweise 250 bis 4 000, mit einem Hydroxylgruppen-Gehalt von 0,6 bis 34 Gew.-%, vorzugsweise 1 bis 27 Gew.-%. Sie können in an sich bekannter Weise durch Alkoxylierung beliebiger mehrwertiger Alkohole, vorzugsweise solchen des Molekulargewichtsbereichs 62 bis 400, hergestellt werden.

Für die Alkoxylierungsreaktion geeignete Alkylenoxide sind insbesondere Ethylenoxid und Propylenoxid, die in beliebiger Reihenfolge oder auch im Gemisch eingesetzt werden können.

Gegebenenfalls können die Polyolkomponenten b) zur gezielten Einstellung der Viskosität der erfindungsgemäßen Zweikomponenten-Beschichtungsmittel bis zu 50 Gew.-%, vorzugsweise bis zu 20 Gew.-%, bezogen auf die Gesamtmenge an Polyolkomponente b), mehrwertige (Ether)Alkohole des Molekulargewichtsbereichs 62 bis 400 enthalten. Geeignete (Ether)Alkohole sind bei Raumtemperatur flüssig, z.B. mehrwertige Alkohole wie 1,2-Ethandiol, 1,2- und 1,3-Propandiol oder 1,4-Butandiol, einwertige Etheralkohole, wie Diethylenglykol, Dipropylenglykol usw., bzw. beliebige Mischungen hiervon.

Das Polyol b) kann zu 0 bis 100 Gew.-% durch Polyamine, insbesondere in blockierter Form (Polyketimine oder Oxazolidine) als Reaktionspartner für das Polyisocyanat a) in der erfindungsgemäßen Bindemittelkombination ersetzt werden.

Als Polykomponente b) können auch vorzugsweise die sekundäre Aminogruppen aufweisenden "Polyasparaginsäureester" (z.B. EP-A 403 921, EP-A 470 461) gegebenenfalls in Kombination mit Polyesterpolyolen und insbesondere Polyacrylatpolyolen eingesetzt werden. Werden Polyamine in der erfindungsgemäßen Bindemittelkombination (mit)verwendet, so sind deren Amingruppen bei der Berechnung des Verhältnisses von Isocyanatgruppen zu gegenüber Isocyanat reaktiven Gruppen mitzuberücksichtigen.

Bevorzugt werden in den erfindungsgemäß zu verwendenden Beschichtungsmitteln als Komponente b) Polyole, insbesondere Polyacrylat-, Polyester- oder Polycarbonatpolyole bzw. Gemische derselben verwendet.

In den erfindungsgemäßen Bindemitteln beträgt das Äquivalentverhältnis der Isocyanatkomponente a) zu gegenüber Isocyanatgruppen reaktionsfähigen Komponenten b) 0,8:1 bis 3·1, vorzugsweise 0,8:1 bis 2:1 und insbesondere 0,8·1 bis 1,5:1.

Die erfindungsgemäßen Bindemittelkombinationen werden durch Abmischung der Einzelkomponenten hergestellt. Im allgemeinen erfolgt die Herstellung der Bindemittelkombinationen und auch der gebrauchsfertigen Beschichtungsmittel in Anwesenheit der in der Beschichtungstechnologie üblichen Lösungsmittel wie beispielsweise Xylol, Butylacetat, Methylisobutylketon, Methoxypropylacetat, N-Methylpyrrolidon, ® Solvesso, Benzin, Chlorbenzole oder deren Gemische.

Im allgemeinen liegt das Gewichtsverhältnis der Summe der Bindemittelkomponenten [a) + b)] zu Lösungsmittel bei 40:60 bis 100:0, vorzugsweise bei 45:55 bis 65:35.

In den die erfindungsgemäßen Bindemittelkombinationen enthaltenden Beschichtungsmitteln können auch andere in der Beschichtungstechnologie übliche Hilfs- und Zusatzmittel enthalten sein, z.B. Pigmente, Füllstoffe, Verlaufshilfsmittel, Katalysatoren, UV-Schutzmittel und dergleichen.

Die Beschichtungsmittel können nach an sich bekannten Methoden, beispielsweise durch Streichen, Tauchen, Fluten oder mit Hilfe von Walzen oder Rakeln, insbesondere aber durch Spritzen auf das jeweilige Substrat aufgetragen werden. Die die erfindungsgemäßen Bindemittelkombinationen enthaltenden Beschichtungsmittel zeichnen sich vor allem durch die schnelle Antrocknung bei milden Aushärtungsbedingungen sowie durch die hervorragende Lösungsmittelbeständigkeit bei gleichzeitig vorhandener Elastizität der hergestellten Beschichtungen aus. Sie stellen ausgezeichnete Autoreparatur- und Industrielacke dar und können hierbei sowohl zur Herstellung von Zwischenschichten als auch von pigmentierten oder unpigmentierten Decklacken eingesetzt werden.

Mit den erfindungsgemäßen Bindemittelkombinationen hergestellte Lacke werden im allgemeinen bei einer Temperatur unterhalb von 100°C, vorzugsweise zwischen 0 und 80°C und besonders bevorzugt zwischen 10 und 60°C ausgehärtet

### Beispiele

### Alle Prozentangaben betreffen Gewichtsprozente

In den nachfolgenden Beispielen werden folgende Ausgangsmaterialien eingesetzt:

### Polyisocyanatkomponente a)

### Polyisocyanat a1), Isocyanurat gemäß EP-A 57 653:

2100 g (15 mol) 1,4-Diisocyanatobutan (BDI) werden in einem Rührgefäß mit Innenthermometer und Stickstoffeinleitungsrohr vorgelegt. Bei 120 bis 125°C werden unter Stickstoff langsam 31,4 g (0,2 mol 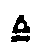 1,5 Gew.-%) Hexamethyldisilazan zudosiert bis nach etwa 6 h ein NCO-Gehalt von 47,4 % erreicht ist. Dann wird durch Zugabe von 1,8 g (0,1 mol) Wasser die Umsetzung abgestoppt. Nach Aufarbeitung durch Dünnschichtdestillation erhält man in einer Ausbeute von 33 % ein klares, nahezu farbloses Produkt mit einem NCO-Gehalt von 24,5 % und einer Viskosität nach DIN 53 019 von 15.000 mPa.s bei 23°C.

Es wird als Polyisocyanat a1) in den Beispielen verwendet.

### Polyisocyanat a2):

Handelsübliches Lackpolyisocyanat, erhalten durch Trimerisierung von 1,6-Diisocyanatohexan (90 %ige Lösung in Butylacetat, NCO-Gehalt der Lösung 19,4 %).

### Polyisocyanat a3):

Handelsübliches Lackpolyisocyanat, erhalten durch Trimerisierung von Isophorondiisocyanat (70 %ige Lösung in Solvent Naphtha 100, NCO-Gehalt der Lösung 11,7 %).

### Polyisocyanat a4)

Mischung der Polyisocyanate a2) und a3) (Verhältnis 70 30 bezüglich Festharz; 70 %ige Losung in Butylacetat/Solvent Naphtha 100, NCO-Gehalt der Lösung 13,9 %)

### Polyolkomponente b):

Als Polyolkomponente b) wird Polyhydroxypolyacrylat (70 %ige Lösung in Butylacetat) eingesetzt. Es hat eine OH-Zahl von 140 und wurde durch Copolymerisation von Styrol, Hydroxyethylmethacrylat, Butylacrylat und Acrylsäure im Gewichtsverhältnis der Monomeren 40:34:25:1 hergestellt. Die Viskosität der 70 %igen Lösung bei 23°C lag bei 4.000 mPa.s.

### Beispiel 1 (erfindungsgemäß)

146 g des Polyisocyanats a1) werden mit 500 g des Polyols b) entsprechend einem Äquivalentverhältnis von NCO:OH = 1:1 zu einem Klarlack formuliert und mit Methoxypropylacetat/Xylol/Butylacetat (1:1:1) auf einen Festkörpergehalt von 50 % eingestellt.

### Beispiel 2 (Vergleichsbeispiel)

173 g des Polyisocyanats a2) werden mit 469 g des Polyols b) entsprechend einem Äquivalentverhältnis von NCO:OH = 1:1 zu einem Klarlack formuliert und mit Methoxypropylacetat/Xylol/Butylacetat (1:1:1) auf einen Festkörpergehalt von 50 % eingestellt.

### Beispiel 3 (Vergleichsbeispiel):

265 g des Polyisocyanats a3) werden mit 432 g des Polyols b) entsprechend einem Äquivalentverhältnis von NCO:OH = 1:1 zu einem Klarlack formuliert und mit Methoxypropylacetat/Xylol/Butylacetat (1:1:1) auf einen Festkörpergehalt von 50 % eingestellt.

### Beispiel 4 (Vergleichsbeispiel)

208 g des Polyisocyanats a4) werden mit 404 g des Polyols b) entsprechend einem Äquivalentverhältnis von NCO OH = 1:1 zu einem Klarlack formuliert und mit Methoxypropylacetat/Xylol/Butylacetat (1.1:1) auf einen Festkörpergehalt von 50 % eingestellt.

Mit den Klarlacken gemäß Beispielen 1 bis 4 wurden sowohl Glasplatten als auch Stahlbleche beschichtet.

Als Stahlbleche wurden Karosseriebleche vom Typ UST 1405, die mit einem marktüblichen Zweikomponenten-Polyurethangrundierungsfüller (40 µ) und einem Basislack (15 µ) auf der Grundlage einer lösungsmittelhaltigen Abmischung von Celluloseacetobutyrat und einem hochmolekularen Polyacrylat beschichtet waren, verwendet.

**Tabelle:**

| Prüfergebnisse (Karosserieblech) | | | | | |
|---|---|---|---|---|---|
| Beispiel | | 1 (erf.gemäß) | 2 Vgl. | 3 Vgl. | 4 Vgl. |
| Festkörpergehalt | % | 50 | 50 | 50 | 50 |
| NCO/OH-Verhältnis | | 1,0 | 1,0 | 1,0 | 1,0 |
| Katalysator^{a)} auf Bindemittel fest | % | 0,3 | 0,3 | 0,3 | 0,3 |
| Auslaufzeit DIN 53 211 | 0 h-s | 19 | 17 | 16 | 17 |
| | 1 h-s | 21 | 20 | 17 | 19 |
| | 2 h-s | 25 | 21 | 17 | 20 |
| | 3 h-s | 27 | 22 | 18 | 21 |
| Trocknung DIN 53 150 | Sandtrocknung - h | 0,5 | 2 | 0,5 | 0,5 |
| | Grifftrocknung - h | 5 | 6 | 5 | 5 |
| Schichtdicke | (µm) | (50) | (50) | (50) | (50) |
| Pendelharte DIN 53 157 | nach 1 d 23°C | 80 | 60 | 70 | 63 |
| | nach 2 d 23°C | 114 | 110 | 115 | 119 |
| | nach 7 d 23°C | 140 | 132 | 180 | 161 |
| nach 30 min 60°C^{b)} | +2 h 23°C | 123 | 87 | 80 | 92 |
| | + 1 d 23°C | 190 | 165 | 135 | 180 |
| | + 2 d 23°C | 195 | 190 | 165 | 197 |
| | + 7 d 23°C | 205 | 220 | 192 | 198 |
| Erichsentiefung DIN 53 156 | nach 7 d 23°C | 7 | 7 | 0.5 | 1 |
| Gitterschnitt (2 mm) DIN 53 151 | nach 7 d 23°C | 0 | 0 | 5 | 0 |
| Superbenzinfestigkeit (1 min/5 min)^{b)} | nach 1 d 23°C | 0/1 | 2/2 | 5/5 | 3/5 |
| | nach 2 d 23°C | 0/0 | 0/0 | 5/5 | 1/1 |
| | nach 7 d 23°C | 0/0 | 0/0 | 4/5 | 0/0 |
| nach 30 min 60°C^{b)} | + 2 h 23°C | 2/4 | 2/4 | 5/5 | 5/5 |
| | - 1 d 23°C | 1/1 | 1/1 | 5/5 | 3/5 |
| | + 2 d 23°C | 0/0 | 0/0 | 5/5 | 2/5 |
| | + 7 d 23°C | 0/0 | 0/0 | 4/5 | 0/3 |

| | | | | | |
|---|---|---|---|---|---|
| a) 1,4-Diazabicyclo[2.2.2]octan, z.B. DABCO LV 33® der Fa. Air Products | | | | | |
| b) übliche Trocknungsbedingungen für die Autoreparaturlackierung c) Wertung 0 - 5, 0 bester Wert, 5 schlechtester | | | | | |

Wie aus der Tabelle ersichtlich ist, zeigt das BDI-Trimerisat (Beispiel 1, erfindungsgemäß) eine schnelle Trocknung bei gleichzeitig vorhandener Elastizität (Erichsentiefung, Gitterschnitt) und ausgezeichneter Superbenzinfestigkeit als Maß für die Lösungsmittelbeständigkeit.

Demgegenüber weist das HDI-Trimerisat (Beispiel 2, Vergleichsbeispiel) eine zu langsame Trocknung auf. Verwendung des IPDI-Trimerisates (Beispiel 3, Vergleichsbeispiel) bzw. Mitverwendung des IPDI-Trimerisates neben dem HDI-Trimerisat (Beispiel 4, Vergleichsbeispiel) führt zur Beschleunigung der Trocknung. Allerdings verschlechtert sich gleichzeitig die Superbenzinfestigkeit, was dafür spricht, daß das IPDI-Trimerisat rein physikalisch mit stark verzögerter chemischer Reaktivität trocknet. Auch die Elastizität ist deutlich schlechter als beim BDI- bzw. HDI-Trimerisat.

## Patentansprüche

1. Bindemittelkombinationen, bestehend im wesentlichen aus
a) einer Polyisocyanatkomponente und
b) einer Polyolkomponente,
wobei die Mengenverhältnisse der Komponenten a) und b) einem Äquivalentverhältnis von Isocyanatgruppen der Komponente a) zu gegenüber Isocyanatgruppen reaktionsfähigen Gruppen der Komponente b) von 0,8:1 bis 3:1 entsprechen, **dadurch gekennzeichnet, daß** das Polyisocyanat ein Isocyanurat-Polyisocyanat auf Basis von 1,4-Diisocyanatobutan (BDI) mit einem Isocyanatgehalt von 20 bis 30 Gew.-% und einem Gehalt an freiem monomeren BDI von weniger als 2 Gew.-% ist.

2. Bindemittelkombinationen gemäß Anspruch 1, **dadurch gekennzeichnet, daß** das Polyisocyanat einen Isocyanatgehalt von 22 bis 28,5 Gew.-% und einen Gehalt an freiem monomerem 1,4-Diisocyanatobutan von weniger als 0,5 Gew.-% aufweist.

3. Bindemittelkombinationen gemäß Anspruch 1, **dadurch gekennzeichnet, daß** das eingesetzte Polyol ein Polyacrylat-, Polyester- und/oder Polycarbonatpolyol ist.

4. Verwendung von Bindemittelkombinationen gemäß Anspruch 1 für die Beschichtung von Substraten bei Temperaturen von 0 bis 100°C.

5. Verwendung von Bindemittelkombinationen gemäß Anspruch 1 in Zweikomponenten-Autoreparaturlacken.

## Claims

1. Binder vehicle combinations, substantially consisting of
a) a polyisocyanate component and
b) a polyol component,
wherein the quantitative ratios of components a) and b) correspond to an equivalent ratio of isocyanate groups of component a) to groups of component b) which are capable of reacting with isocyanate groups of 0.8:1 to 3:1, **characterised in that** the polyisocyanate is an isocyanurate-polyisocyanate based on 1,4-diisocyanatobutane (BDI) with an isocyanate content of 20 to 30 % by weight and a content of free monomeric BDI of less than 2 % by weight.

2. Binder vehicle combinations according to claim 1, **characterised in that** the polyisocyanate has an isocyanate content of 22 to 28.5 % by weight and a content of free monomeric 1,4-diisocyanatobutane of less than 0.5 % by weight.

3. Binder vehicle combinations according to claim 1, **characterised in that** the polyol used is a polyacrylate-, polyester- and/or polycarbonate polyol.

4. Use of binder vehicle combinations according to claim 1 for the coating of substrates at temperatures of 0 to 100°C.

5. Use of binder vehicle combinations according to claim 1 in two-component automobile repair lacquers.

## Revendications

1. Combinaisons de liants, constituées essentiellement
a) d'un constituant polyisocyanate et
b) d'un constituant polyol,
les proportions des constituants a) et b) correspondant à un rapport en équivalents des groupes isocyanate du constituant à) aux groupes du constituant b) réagissant avec les groupes isocyanate de 0,8:1 à 3:1, **caractérisées en ce que** le polyisocyanate est un polyisocyanate de type isocyanurate à base de 1,4-diisocyanatobutane (BDI), ayant une teneur en isocyanate de 20 à 30 % en masse et une teneur en BDI monomère libre inférieure à 2 % en masse.

2. Combinaisons de liants selon la revendication 1, **caractérisées en ce que** le polyisocyanate présente une teneur en isocyanate de 22 à 28,5 % en masse et une teneur en 1,4-diisocyanatobutane monomère libre inférieure à 0,5 % en masse.

3. Combinaisons de liants selon la revendication 1, **caractérisées en ce que** le polyol utilisé est un polyacrylatepolyol, un polyesterpolyol et/ou un polycarbonatepolyol.

4. Utilisation des combinaisons de liants selon la revendication 1 pour le revêtement de substrats à des températures de 0 à 100°C.

5. Utilisation des combinaisons de liants selon la revendication 1 dans des peintures de réparation d'automobiles à deux constituants.
